# EUROPEAN PATENT APPLICATION

(11) **EP 1 457 532 A2**
(43) Date of publication of application: **15.09.2004**
(21) Application number: 04380048.1
(22) Date of filing: 05.03.2004
(51) Int. Cl.: C09D 5/46, C08J 11/00

(54) **Recovery procedure of paint-powder residues**

(30) Priority: 10.03.2003 ES 200300574
(71) Applicant: IZI LACK, S.L., Peniscola (Castellon) (ES)
(72) Inventor: Pellicer Roca, David, Peniscola Castellon (ES)
(74) Representative: Maldonado Jordan, Julia

(57) **Abstract**

Intended for the reuse of paint residues with granulometry below 10 micrometers, the particles of which cannot be electrostatically loaded in order to apply the paint, it consists in the inserting of the residues in sacks with porous walls, which, during a pre-compaction phase permits the through-exit of air contained between the paint particles, and the consequent compaction of the paint, subsequently subjecting said product to a second compaction phase, specifically pouring it into a hopper (1) in which screws (2) determine a forced circulation of the product towards a pair of compaction rollers (3), where the final compaction is produced, and which pour, through a hopper (6) into a mill (7), where the compacted product is ground, acquiring a granulated appearance, the same as the raw material used in the manufacturing of paint-powder, so that, in similar manner to this raw material, it can be subjected to the classical extrusion procedure for re-obtaining paint-powder, now with suitable particle size for its electrostatic loading.

## Description

### OBJECT OF THE INVENTION

The present invention refers to a procedure that has been specially conceived to recover the residues of paint-powder that are generated both during manufacturing and during its subsequent use, with the purpose of taking advantage of it and of its reuse.

In consequence, the object of the invention is to eliminate the greater part of the contaminated residues currently produced in the field of paint-powders, that are applied by electrostatic loading, subsequently reusing these residues as the paint they in fact are, and by means of the same classic procedure.

### BACKGROUND OF THE INVENTION

As is already known, two great industrial areas in the area of paints exist, one in which the paint that is offered to the consumer is in liquid or paste form, with the collaboration of solvents, and another without these solvents, in which the paint appears in the form of powder, in such a way, that by electrostatically loading the paint particles, either by means of a generator or by friction, for example with a positive polarity, and loading in turn, the part to be painted, in this case with a negative polarity, an attraction effect is created between the part and the paint, which makes the latter totally cover the former, for its subsequent oven heating in a polymerisation oven at temperatures around 200° C.

This solution, which is perfectly valid from the theoretical point of view, poses in practice, the problem that it creates an important percentage of residues, since, due to their reduced mass, the paint-powder particles below 10 micrometers cannot be electrostatically loaded, and in consequence, they create a residue that statistically may be calculated as 5,88% of the total of the manufactured paint.

For this, during the grinding process and by means of aspiration in which a sleeve filter collaborates, all particles with sizes below said 10 micrometers are extracted from the product.

Likewise, a residue is in turn created during the use of the product, that can statistically be calculated as 6 % of the paint used.

This percentage of the material currently generates a very fine and large volume residue which poses a problem that has been unsolvable up to now for its recovery.

### DESCRIPTION OF THE INVENTION

The procedure proposed by the invention permits the integral recovery of powder particles below 10 micrometers, that is to say, it eliminates the existence of residues during the manufacturing process or use of the paint and, consequently, it eliminates the contaminating effect derived from said residues.

For this, and in a more specifically, the invention parts, after the filtering of the paint subsequent to the grinding phase and after independisation of all particles with sizes that do not permit their electrostatic loading, from the storage of said particles in fabric sacks or "big-bags", the porosity of which permits, in due time, the exit of air existing inside. Specifically, this exist is produced when, after closing the bags, a pre-compaction phase, by means of a hydraulic press, is performed.

The drop rate of the hydraulic cylinder of the press must be controlled to prevent the breaking of the sack or big-bag due to the impact.

During this stage, the sack or big-bag acts as filter, leaving air escape and preventing the leakage of the paint-powder. However, it may be advisable to use aspiration equipments for the eventual recollection of small particles that might leak through the porous walls of the big-bag.

The pressure for an optimum compaction, that is to say, for the total exist of air, shall preferable be over 5 tons.

After this pre-compaction phase, the contents of the sacks or big-bags are poured into a machine in which a second compaction phase is carried out, preferably with the collaboration of press rollers or compactors.

Next, proceed to a grinding phase in which the previously compacted product is converted into a granulated structure, similar to that of raw material for the manufacturing of paint-powders once mixed and prepared to pass on to the extrusion phase.

On obtention of said granulations, the material can be directly extruded or its formulation can be reworked to obtain another finished product with prior extrusion and grinding, the particle size of which, is sufficient for them to be electrostatically loaded in the subsequent paint application operation.

### DESCRIPTION OF THE DRAWINGS

In order to complement the description that is being made and with the object of helping to better understand the characteristics of the invention, according to a preferred practical embodiment example of the same, one single sheet of drawings is enclosed, forming integral part of said description, in which, with illustrative and non limitative character, a machine for performing the procedure of the invention has been schematically and cross-sectionally represented, with the exception of the first operative phase of the same, that of compaction by means of pressing.

### PREFERRED EMBODIMENT OF THE INVENTION

As has been previously expounded, the residue of the paint-powder that is wished to be recovered, that is to say, with a particle size below 10 micrometers, is stored in big-bags or fabric sacks, with porous walls, that are advantageously closed and that are subjected to a first compaction phase, or pre-compaction, by means of a hydraulic press, not represented in the drawings.

For putting into practice of this pre-compaction phase, a press with the same characteristics as those used in the pressing of paper and plastic residues can be used, though, as has already been previously indicated, the drop rate of the hydraulic cylinder must be controlled to prevent, due to its rapidity, that breakage of the big-bag is caused, which acts as filter, leaving the air escape and avoiding leakage of the paint.

Once the pre-compaction phase has concluded, the powdered product contained in the big-bags are emptied inside a hopper (1) that acts as feeder for the second compaction phase existing in the process.

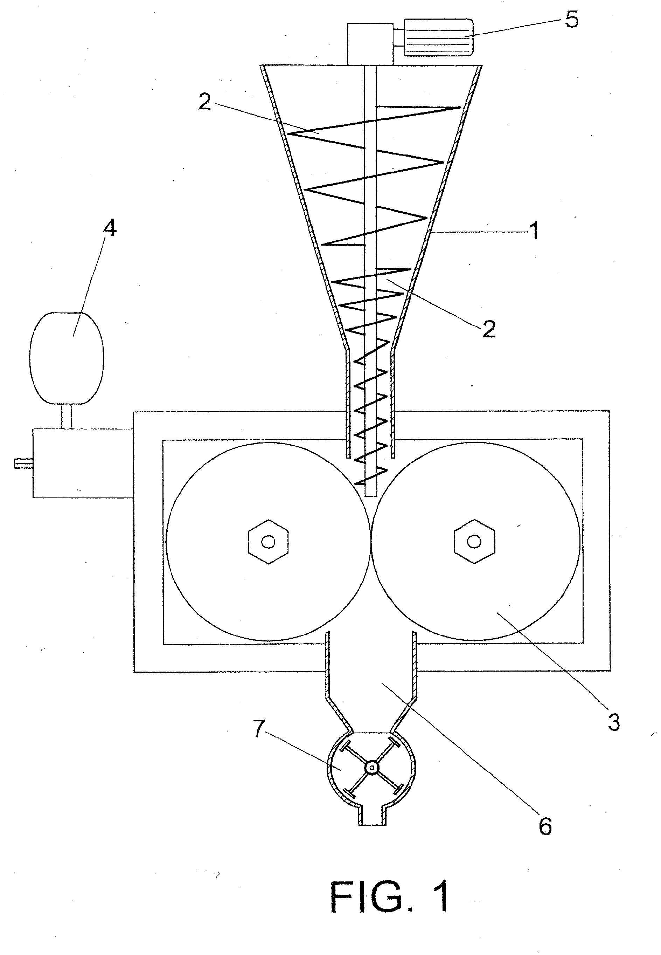

As can be observed in the figure, one or various screws (2) are to be found inside the hopper (1), the purpose of which is to force-feed rotating rollers (3) existing at the exit of the hopper, that is to say, at its bottom area. For this purpose, the screw (2) has a configuration that reduces the volume of the powder through its helical pitches, which are progressively closed more and more. The rate of this screw is related to the rate of the bottom rollers (3) and to their compaction pressure.

As example, screw (2) supplies material to the rollers (3), in such a manner that when the supply of material is excessive and it increases the compaction pressure, an expander decanter (4) starts to function, separating the rollers and leaves the material to pass through. When this occurs, the feeding screw (2) must decrease its revolutions to decrease the supply of material, advantageously controlling the rate of its actuating engine (5).

Since each product can have different physical and chemical characteristics, optimum service conditions must be sought, taking into account the following variables. Screw (2) feeding rate, roller (3) rate, pressure of said rollers (3) and pressure of the expander beaker (4). In any case, the minimum roller (3) service pressure must be over 5,5 tons.

In this sense, and for a machine with rollers (3) of 320 mm diameter and a width of 76 mm, the service rate for these rollers, in order to obtain a reasonable production, is to be found comprised between 4 and 60 revolutions per minute.

Rollers (3) may be perfectly cylindrical and smooth or adopt different configurations, so that the production can be variable depending on its configuration, and can for example be grooved in the direction of its generatrix and with closed grooves at its ends.

Once the material exits from the compaction rollers (3) it drops towards a receiver hopper (6) which in turn feeds a mill (7), which rotates against a perforated wire netting with orifices comprised between 2 and 6 mm, though said wire netting can be substituted by another with different perforation sizes, depending on the results wished to be obtained.

Finally, the thus obtained granulated product can be directly extruded or can receive any type of rework in its formulation in order to obtain another finished product, with prior extrusion and grinding as is conventional.

The process that is the object of the invention provides the processing of products in powder form within a normal manufacturing process, since extrusion of the paint-powder is difficult, because, due to its fine granulometry, when it nears the extruder casing which has a temperature of approximately 90° C, it starts to liquidate, forming a paste which attacks the feeding. Then, the only solution is to lower the extruder rate, allowing only its reprocessing at low productions. On the contrary, if it compacts and granulates, according to the procedure of the invention, the extrusion rate is the normal production rate, making its reprocessing much more interesting.

## Claims

1. Procedure for the recovery of paint-powder residues, specifically for the recovery of particles below 10 micrometers which due to their reduced mass, cannot be electrostatically loaded for application of the paint, **characterised in that** it consists in subjecting said residues, in the form of fine powder, to a first compaction phase, followed by a granulation phase to obtain a granulated product which can be processed in a conventional way in an extruder, for the obtention, once again, of paint-powder with a particle size suitable for its electrostatic loading.

2. Procedure for the recovery of paint-powder residues, according to Claim 1, **characterised in that** the paint-powder residue is inserted in big-bags, that is to say, in fabric sacks with porous walls which permit the passage of air through the same, but not the passage of paint-powder, sealing closed said sacks and subjecting them to a first pre-compaction phase by means of a hydraulic press, for the total elimination of air, subsequently proceeding to a second compaction phase in which the contents of the sacks are poured over a press equipped with a progressively closing screw which generates a forced feeding towards a pair of bottom rollers, where the compaction is completed when the material passes through them, having provided, that after said compaction phase, the material is conducted through a receiving hopper towards a mill where the granulated product is obtained, with similar granulometry to that of raw material in which paint-powder is generally obtained, said granulated product being in a condition that makes possible its extrusion in conventional manner.
